# EUROPEAN PATENT SPECIFICATION

(11) **EP 2 859 998 B1**
(45) Date of publication and mention of the grant of the patent: **11.04.2018**
(21) Application number: 14003523.9
(22) Date of filing: 14.10.2014
(51) Int. Cl.: B25J 9/08, B25J 9/10, B25J 17/02

(54) **MODULAR ROBOTIC KIT AND METHOD FOR PRODUCING A ROBOTIC SYSTEM**
MODULARER ROBOTERSATZ UND VERFAHREN ZUR HERSTELLUNG EINES ROBOTERSYSTEMS
KIT DE ROBOTIQUE MODULAIRE ET PROCÉDÉ DE PRODUCTION D'UN SYSTÈME ROBOTIQUE

(30) Priority: 14.10.2013 EP 13004909
(43) Date of publication of application: 15.04.2015
(73) Proprietor: Fraunhofer-Gesellschaft zur Förderung der angewandten Forschung e.V., 80686 München (DE)
(72) Inventor: Maufroy, Christophe, Dr., 70771 Leinfelden (DE); Pfeiffer, Kai, 70771 Leinfelden (DE); Siee, Maik, 71083 Herrenberg (DE)
(74) Representative: Rösler, Uwe

(56) References cited:
- WO-A1-2006/072124
- US-A- 4 729 253
- US-A1- 2010 243 344

## Description

### Technical Field

The invention relates to a modular robotic kit containing a set of components each of which is assignable into one of at least three different functional groups in which the first functional group contains at least one type of an actuator, the second functional group contains at least one type of a joint and the third functional group contains at least one type of a structure.

### Background of the Invention

Traditional robots have been developed with a focus on precision, speed and power. These requirements have led to very successful industrial robots. However these kind of industrial robots are typically not designed for domestic, entertainment and service robotics applications. In contrast, so called musculoskeletal robots have the potential to overcome the safety and performance problems of traditionally actuated robots, especially in human-centered environments. The term "musculoskeletal robots" is inspired by principals of biological systems providing a light-weight structure and an intrinsic compliance, like in case of the human body providing a skeleton consisting of stiff bones, most of them are connected via muscle-actuated joints for performing compliant motions. Musculoskeletal robots therefore mainly consist of stiff structure type components which are connected by hinge or joint type components which allow movements about at least one spatial axis. To perform controlled relative movements between two connected structure type components at least one actuator type component is provided which varies the length of at least one tension transmitting element like a cable, which is in operative connection with both structure type components and is comparable to a tendon in a biological system for transferring tension forces only between both connected structure type components.

Currently there are a number of robots built according to musculoskeletal designs. Among the most examples the most popular musculoskeletal robots are:
I. Mizuuchi et al., "An advanced musculoskeletal humanoid kojiro", in Proc of International Conference on humanoid robots, 2007;
I. Mizuuchi et al., "Development of musculoskeletal humanoid kotaro", Proc of the 2006 IEEE International Conference on robotics and automation, 2006;
H. Marques et al., Ecce 1: The first of a series of anthropominetic musculoskelal upper torsos, "Humanoids 2010", 2010.

In the context of length locomotion, examples of musculoskeletal robots include the Jena walker, see A. Seyfarth et al., "Towards bipedal running as a natural result of optimizing walking speed for passively compliant three-segmented legs", IJRR, 28 (2): 257 - 265, 2009, the pneumatic walking and jumping robots see K. Hosoda et al., "Pneumatic-driven jumping robot with anthropomorphic muscular skeleton structure", Auton Robot, 28: 307 - 316, 2010.

A common feature shared by all the known musculoskeletal robots is that they utilize custom-made and therefore often complex hardware and software because off-the-shelf components are usually not available. As a result, the total cost of the robotic platform is usually prohibitive and the final system is seldom used by people other than those who built it.

### Summary of the Invention

It is an object of the invention to spread the use of musculoskeletal robots and to allow innovative research as well as the discovery of application based on this typical robot design, including in the field of legged locomotion robotic research. Therefore it is a further object of the invention to provide a modular, configurable, easy-to-use and cost-effective robot construction and development tool kit.

An example of a robot construction and development tool kit is known from WO 2006/072124 A1. The object is achieved by the sum total of the features in the independent claims 1 , 14, 15 and 16.

The invention can be modified advantageously by the features disclosed in the sub claims as well in the following description especially referring to preferred embodiments illustrated in figures.

The inventive modular robotic kit contains a set of components each of which is assignable into one of at least three different functional groups in which the first functional group contains at least one type of an actuator, the second functional group contains at least one type of a joint and the third functional group contains at least one type of a structure, in which the components of each functional group are characterized in the following way:
The actuator type component contains at least one motor driven shaft, at which at least one end of a tension transmitting element, like a cable, is fixed for up- and unrolling at least a section of the tension transmitting element around the shaft. Further at least one mechanical interface is provided for attaching the actuator type component on the structure type component described below.

The joint type component has two sections providing each at least one connection interface and being arranged relative to each other by having one up to three degrees of freedom of rotation and zero up to one degree of freedom of translation between the both sections. At least one of the two sections provides a fixing means for fixing at least one section of the tension transmitting element of an actuator type component. Further the connection interfaces of both joint type components being adapted for a releasable and direct or indirect connection with the connection interface of another joint type component or with a connection interface of a structure type component.

The structure type component contains a rigid support structure having at least two ends, at each end a plate like structure is arranged at which the connection interface is provided for a releasable and direct or indirect connection with the connection interface of a joint type component or another structure type component, and the rigid support structure provides at least one mechanical interface for connecting with the mechanical interface of the actuator type component.

On basis of the three before mentioned type of components the inventive modular robotic kit enables to build up a robotic system which is based on so called "tendon-driven kinematics" that features highly integrated modules connected via electromechanical, quick release interfaces.

Due to the use of at least one tension transmitting element for actuation purposes the operation of the joint type component is intrinsically compliant, which makes it particularly attractive for designing robots aimed at close physical interaction with humans.

The joint type component is a so called passive joint which preferably is designed with an integrated absolute position sensing system, so that the degree of deflection can be measured and controlled very precisely.

The modular robotic kit facilitates both flexibility as well as the capability for significant savings in weight, volume and development costs.

The compliant characteristic of the robotic system composed of the components provided by the modular robotic kit is based on at least one compliant element being part of the actuator type component and/or the tension transmission element preferably. Alternatively or in combination with the before combined components the compliant element can be part of an extra component, which is releasably attachable to the structure type component, the actuator type component and/or the joint type component. In all possible embodiments the compliant element is arranged and configured such that tension in the tension transmitting element results in an elastic deformation of the compliant element which preferably is a spring or a component made of elastomeric material.

In a preferred embodiment the actuator type component provides at least one first redirecting element for guiding the tension transmitting element towards at least one joint, in which the redirecting element is in the form of a pulley which preferably is connected with the compliant element for transferring tension forces onto the tension transmitting element which partially rests on the periphery of the pulley. In addition it may be advantageous for the reduction of disturbing vibrations along the tension transmitting element to combine the compliant element mechanically with a damper element, for example with a so called Stockbridge damper.

A preferred actuator type component, which will be described in more detail in combination with the figures, provides a housing in which a geared electric direct current (DC) motor is integrated for driving the at least one motor driven shaft. Further the compliant element in form of a spring is supported on the housing of the actuator and mechanically connected with the pulley around which the cable is guided partially.

The structure type component contains at least one elongated structural profile which is of stiff material, preferably in the form of a lightweight rod or tube, made of a fiber-reinforced plastic. In case of at least two elongated structural profiles, at least one spacer element is releasably connected with the at least two elongated structural profiles, in which the spacer element is of rigid material to establish a rigid support between the at least two elongated structural profiles in an orthogonal direction towards a longitudinally extension of the elongated structural profiles. At both ends of the at least one rod or tubular shaped elongated structural profile a plate-like structure is arranged which provides a connection interface being integrally connected with the plate-like structure or the connection interface can be mounted on the plate-like structure as a separate component.

The joint type component can be selected from at least three different types of joints. A first type of joint enables one degree of freedom of rotation around an axis which is oriented orthogonally to the elongated direction of two structure type components which are connected by the joint, i.e. the joint enables swivel movements of one structure type component relative to the other. For this purpose both sections of the joint provide a fork-like structure, each of which has at least two prong-like extensions oriented parallel to each other. The prong-like extensions of each of the two sections engage with each other and are rotatably mounted around an axis of rotation which intersects all prong-like extensions orthogonally to their parallel extension.

In a simple embodiment in which the before mentioned joint connects two structure type components one actuator type component is fixed on a first of both structure type components by its mechanical interface. The tension transmitting element, which is attached one sided at the rotating shaft of the actuator, is connected at its other end either with the second structure type component or with the section of the joint which is connected with the second structure type component rigidly, so that tension forces can act along the tension transmitting element between both structure type components. When applying tension forces both structure type components moves towards each other around the axis of the passive joint. To allow a counter-rotational movement of both structure type components, either a tension spring or the like or a second actuator with a separate tension transmitting element has to be provided.

In a preferred embodiment of the joint mentioned before, one of the two sections has three prong-like extensions, in which the middle arranged prong-like extension of the three prong-like extensions provides at least partially a disk-like structure with a circular periphery which is centered around the axis of rotation and along which the tension transmitting element is guided partially so that the transmitted tension force has a constant lever arm with respect to the joint axis. The other end of the tension transmitting element is fixed by the fixing means on said section. The two outer arranged prong-like extension engage rotatably with the prong-like extensions of the other section.

To produce a counter force to the deflection force which is initiated by the actuator powered tension transmitting element mentioned before, an end of a second tension transmitting element being actuated from a separate actuator type component is guided along the circular periphery of the disk-like structure and being fixed by a separate fixing means on said section, so that along both tension transmitting elements tensile forces can act onto said disk-like structure in opposite orientation around the axis of rotation.

A second type of joint enables relative rotational movement of two elongated structure type components being parallel to each other around one axis of rotation which is parallel to the two connected structure type components. Such type of joint provides two connection interfaces, each belongs to one section of the joint and each connection interface defines a connection plane, which are oriented parallel to each other. Both sections are rotatably mounted around an axis of rotation intersecting both connection planes orthogonally. One of both sections provides a circular periphery being centered on the axis of rotation and along which the tension transmitting element is guided at least partially. The other end of the tension transmitting element is fixed by the fixing means on said section, in which the one end of the tension transmitting element is attached on the rotating shaft of the actuator type component.

To produce a counter force to the rotating force which is initiated by the actuator powered tension transmitting element mentioned before, an end of a second tension transmitting element being actuated from a separate actuator type component is guided along the circular periphery and fixed by a separate fixing means on said section, so that along both tension transmitting elements tensile forces can act onto said section in opposite orientation around the axis of rotation.

Alternative or in combination with the actuator powered second tension transmitting element for producing a counter force an elastic element can be used for producing the counter force. For example a spring or an elastic member may be integrated along the second tension transmitting element instead of the actuator type component.

Finally a third type of joint enables relative rotational movement around three mutually perpendicular axes. Here one of the two sections of the joint provides a fork-like structure with at least two prong-like extensions oriented parallel to each other, at which ends a semicircular guiding element is mounted rotatable around a first axis. On said semicircular guiding element to which a circular axis is associated, a sliding element is bidirectional slidably mounted. Hereby the circular axis is oriented orthogonally to the first axis and is called the second axis. The other of the two sections of the joint is mounted rotatable around a third axis on the sliding element, in which the third axis is orthogonal to the first and second axis.

For a controlled relative deflection of both sections of the joint around the three mutually perpendicular axes, at least the following tension transmitting elements are provided. At least one tension transmitting element, which is actuated from an actuator type component, is unilaterally fixed at the sliding element for moving the sliding element along the semicircular guiding element around the second axis. At least one further tension transmitting element, which is actuated from a further actuator type component, is unilaterally fixed at the sliding element for pivoting the sliding element together with the semicircular guiding element around the first axis. Finally at least one further tension transmitting element, which is actuated from a further actuator type component, is unilaterally fixed at the other of the two sections providing a circular periphery being centered on the third axis and along which the tension transmitting element is guided at least partially.

To produce a counter force around each of the three mutually perpendicular axes in each case a further pair of actuator type component and tension transmitting element has to be arranged on the joint which is disclosed in an illustrated embodiment in the following.

In the same way as in case of the structure type element the joint type element provides at both sections a connection interface being integrally connected with the section or the connection interface can be mounted on the section as a separate component.

In both cases of the structure type component and the joint type component each connection interface provides a peripheral circular flank, which results in a peripherally circulating conical flank, i.e. the flank has a conical cross-section, when two connection interfaces adjoin each other. A specific preferred embodiment is illustrated in figures below.

A separate clamp ring device ensures clamping of both joined connection interfaces, in which said clamp ring device has a nut like recess into which the conical peripherally circulating flank protrudes. In a preferred embodiment the clamp ring device consists of two clamp ring halves which are joinable and fixable to each other preferably by screws.

Since at least the actuator type component needs electrical power as well control signals for a controlled activation it is favorable that the connections interfaces of the structure type component and the joint type component include at least one electrical contact device for enabling an electrical contact between the components to which the connection interface belong, when the two connection interfaces are mechanically connected.

Although the joint type component is a passive mechanical component merely, i.e. in the joint there is no active drive integrated, it is preferable to provide at least one angle sensor for measuring the actual position of deflection of the joint. The at least one angle sensor is integrated in the joint, so that electrical signals and power have to be transferred to and from the at least one sensor which can be established by the electrical contact device integrated within the connection interfaces of the structure type and joint type component.

Depending on specific requirements on a robot system, for example in view of degree of freedom, size, weight, type of operation among many others, the inventive modular robotic kit establishes the prerequisite for building in an easy, fast and cheap way a robotic system having a serial and/or parallel kinematic structure being activated by at least one tension transmitting element, preferably by cable or belt.

The method for producing such kind of a robotic system having a serial and/or parallel kinematic structure being activated by a least one tension transmitting element comprises the following steps inventively:
Providing a set of actuator type components and joining type components and structure type components as described before. Subsequently selecting at least one component of each set and joining the selected actuator type component on the selected structure type component and connecting the connection interface of the selected joint type component with the connection interface of the plate like structure of the selected structure type component. Finally fixing the tension transmitting element between the actuator type component and the joint type component for transmitting tension forces between both components.

For realization of a robotic manipulator which is deflectable in two opposite directions it is preferably to provide a second actuator type component and join the second actuator type component on said selected structure type component. A second tension transmitting element may be fixed between the second actuator type component and the joint type component such that counter tension forces act on both components.

The scope of the invention however is not limited to the above cited materials.

### Brief Description of the Figures

The invention shall subsequently be explained in more detail based on exemplary embodiments in conjunction with the drawing. In the drawing
- Fig. 1: robot arm built out of the components of the inventive modular robotic kit,
- Fig. 2a, b: perspective view and cross sectional view of a preferred embodiment of an actor type component,
- Fig. 3a, b: illustration of a structure type component in an individual components view (a) and in general view (b),
- Fig. 4: end view of a structural type component with a re-directing element,
- Fig. 5a,b,c,d: flank clamp device in several illustrations:
a) perspective view,
b) longitudinal sectional illustration,
c) illustration of individual components and
d) electrical contact device,
- Fig. 6: perspective view of an assemble of individual elements of a joint type component with one rotational degree of freedom around the longitudinal axis of the joint type component,
- Fig. 7: illustration of individual components of a joint type component having one rotational degree of freedom around a rotational axis orthogonal to the longitudinal axis of the joint type component and
- Fig. 8a,b: a two-sided view of a joint type component for enabling relative movement around three mutually perpendicular axis.

### Detailed Description of exemplary Embodiments

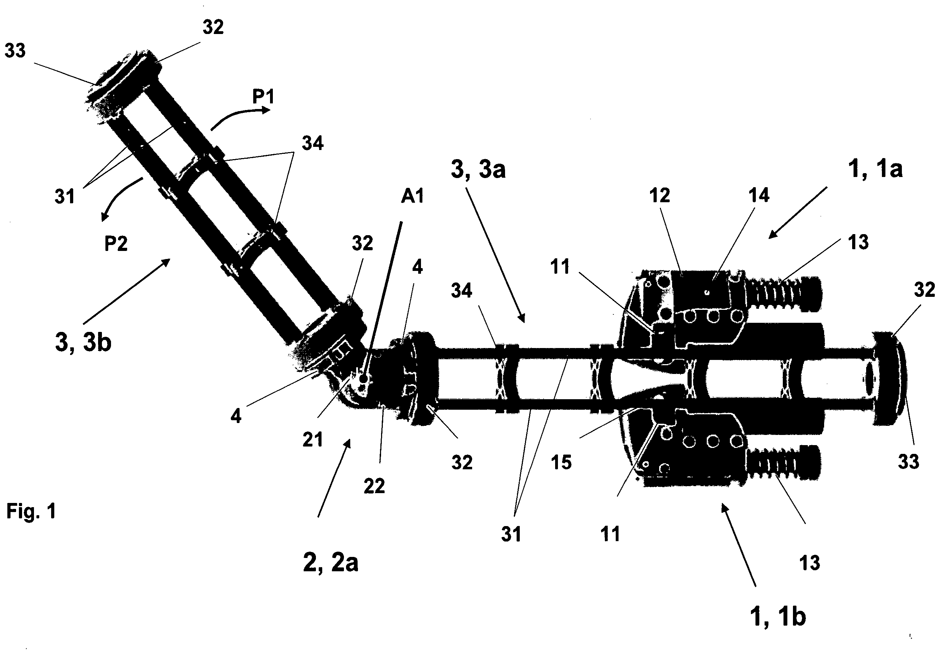

Figure 1 shows a side view of a robot arm construction exclusively built out of components which belong to the inventive modular robot kit. The illustrated robot arm construction comprises a first robot arm 3a which is connected with a second robot arm 3b by a single pivot joint 2a so that the second robot arm 3b is mounted bidirectionally pivotable about the first axis of rotation A1 which is illustrated by the arrows P1 and P2.

A controlled deflection of the second robot arm 3b relatively to the first robot arm 3a about the first axis of rotation A1 is accomplished ty two actuators, a first actuator 1a and a second actuator 1b. Both actuators 1a, 1b are fixedly mounted on the first robot arm 3a. Each actuator is associated with a tension transmitting element, for example in the form of a cable, which is not illustrated in figure 1 but which is connected in each case on the one hand to the actuator and the other to the single pivot joint 2a. To deflect the second robot arm 3b up, as indicated by the arrow of motion P1, it is necessary to activate both actuators 1a, 1b in order to reduce the length of the cable which is assigned to the first actuator 1a and to enlarge the length of the cable assigned to the second actuator 1b. To deflect the second robot arm 3b down, the control of the first and second actuator 1a, 1b must be done vice versa.

The individual robot arm construction shown in figure 1 represents one example of a multitude of possible variations of robotic systems, which can be realized on basis of the set of components each of which is assignable into one of at least three different functional groups, namely a first group containing actuator type components, a second group containing joint type component and a third group containing structure type components. All components will be described in more detail referring to the following illustrations, the specific embodiment shown in figure 1 will help to understand the functional interconnection of all components more easily, so that in the further description reference shall be made also to figure 1.

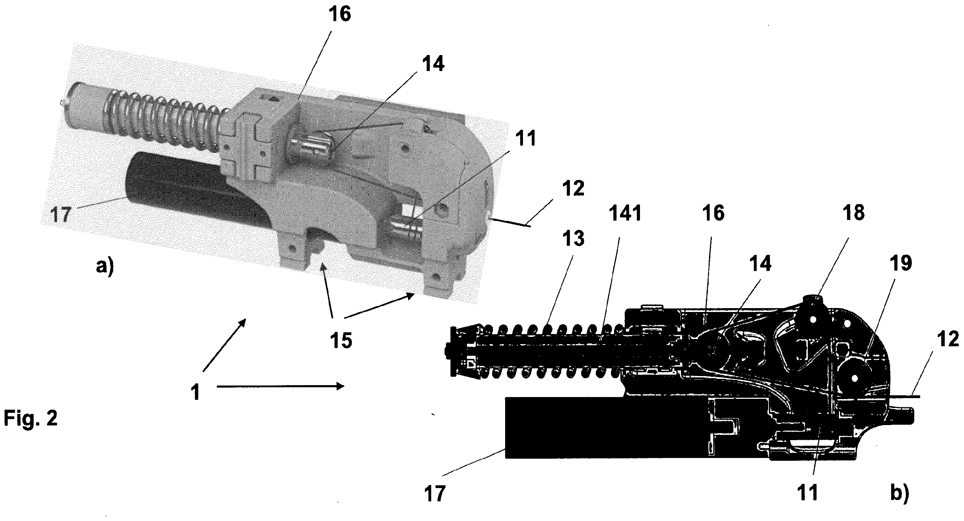

The first and second actuator 1a, 1b, shown in figure 1, belong to a first functional group of actuator type components. One specific embodiment of such an actuator type component is illustrated in figure 2, which shows a perspective view in figure 2a and a longitudinal section view in figure 2b. The actuator type component 1, in short term called actuator, provides a housing 16 preferably made of plastic material produced by a generative manufacturing process, in which several components are included or being supported on the housing 16. A first component concerns an electrical motor 17, for example a step motor, having a motor driven shaft 11 at which at least one end of a tension transmitting element 12, preferably a cable, is fixed for up- and unrolling at least of a section of the cable around the shaft 11. To simplify further description the term "cable" will be used instead of tension transmitting element.

In the housing 16 of the actuator 1, at least one, preferably three re-directing elements in the form of guide rollers or pulleys 14, 18, 19 are provided, each of the pulleys are mounted for free rotation. The cable 12 is guided partially around the periphery of each pulley 14, 18, 19 as can be derived from the longitudinal sectional view of figure 2b. The cable 12 leaves the housing 16 to the right as shown in both figures 2a, b. The pulleys 18, 19 are mounted in the housing 16 around a fixed axis of rotation, whereas the pulley 14 is arranged at one end of a shaft 141 which is supported against a spring force linearly displaceable on the housing 16. The spring force is generated by a compliant element 13 which is in case of figure 2 a tension spring.

The cable 12 is fixed, as will be described in the following, at its other end on a joint type component 2 so that the cable 12 remains always under mechanical tension. In case of high tensile forces acting along the cable 12 the compliant element 13 will be compressed so that tension peaks along the cable can be absorbed smoothly.

Further the housing 16 comprises a mechanical interface 15 which allows a firm attachment of the actuator 1 on the structure type component 3 which belongs to a further functional group of the set of components of the inventive modular robot kit.

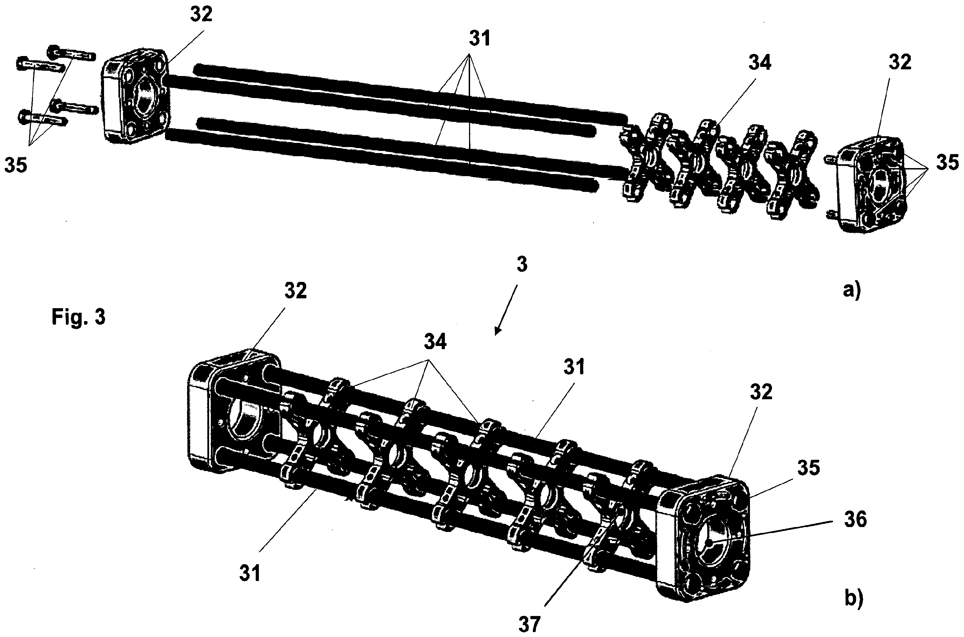

A preferred embodiment of a structure type component is shown in figures 3a and b, which shows in figure 3a all individual parts and in figure 3b an assembled structure type component 3. The structure type component 3 corresponds to the arm of a robot system, which enables to absorb and transmit load forces. The requirements imposed on the structure type component 3 are light weight, stiffness, robustness and mechanical strength. To meet these requirements it has proven to be advantages to use light weight elongated structural profiles 31, preferably made of carbon or fiber re-enforced material, in form of rods or tubes, which provide a high degree of axial stiffness and transvers load capacity. To enhance payload and stiffness of the structure type component 3 two or more elongated structural profiles 31 are used to realize a stable structure type component 3. In case of the embodiment shown in figures 3a, b four elongated structural profiles 31 are connected by so called spacer elements 34, which are made of rigid material, preferably made of aluminum to establish a rigid support between the four elongated structural profiles 31 in an orthogonal direction towards the longitudinally extension of the elongated structural profiles 31. At both ends of the elongated structural profiles 31 a plate-like structure 32 is fixed by screws, which can be brought into engagement with an internal threat at each end of the elongated structural profiles 31. Figure 3b shows the structure type component 3 in an assembled state. The structure type component 3 can be provided in different length and sizes depending on the demand of the robot system which has to be realized. It is also possible to use less or more elongated structural profiles than four as illustrated, also the number of spacer elements 34 can be chosen individually depending on weight and load aspects of the robot system.

In case of the illustrated embodiment in figure 3 the elongated structural profiles provides a circular periphery to which the mechanical interface 15 of the actuator 1 is adapted individually to ensure a firm attachment of the housing 16 of the actuator 1 along the structure type component 3 in a defined position. The mechanical interface 15 is realized by a clamping mechanism which encloses at least one elongated structural profile firmly. The position of attachment of the at least one actuator along the elongated structural profiles can be chosen individually.

The plate like structures 32 as well as the spacer element 34 each encompass a central hole 36, 37 through which electrical lines or other supply lines can be passed through.

Further for connection purposes at each plate like structure 32 a connection interface 33 is provided or attached which is shown in figure 1, see left end of the robot arm 3b.

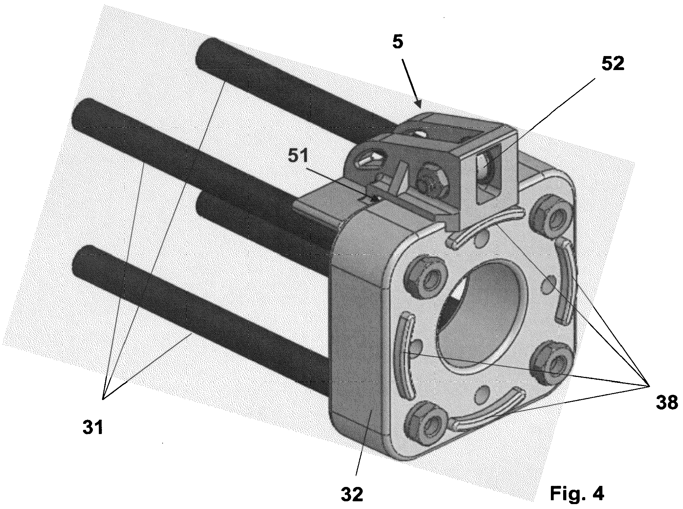

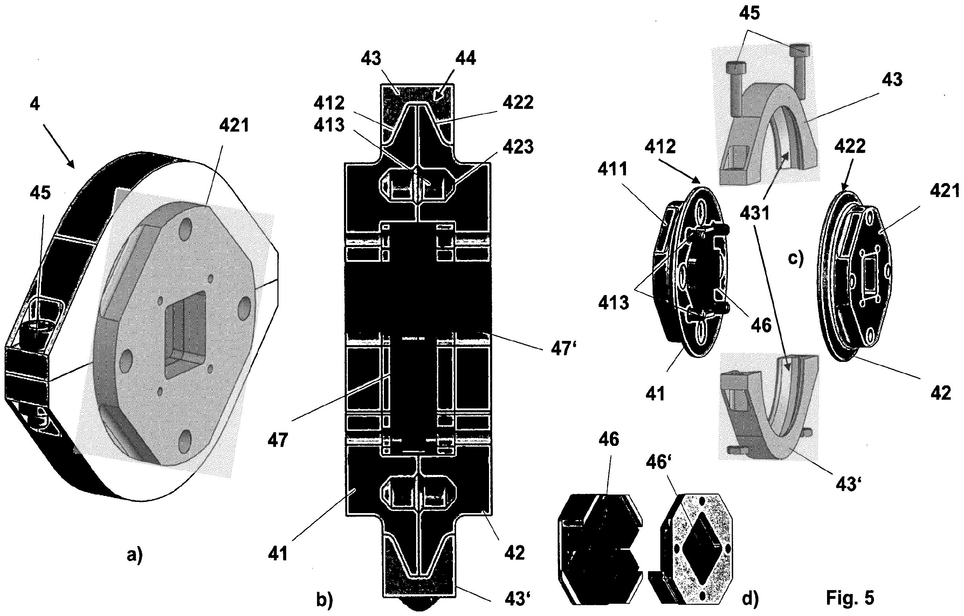

In a preferred embodiment the connection interface 33 is a separate component 41 or 42 see figure 5b, c, which can be attached firmly to the plate-like structure 32 of the structure type component 3. For this the connection interface 33 in the form of a separate component 41 provides a connection means 411 which can be adapted into a receptive structure 38 being provided at the front of the plate-like structure 32, see figure 4 showing a detailed illustration of a plate-like structure 32. The same corresponds to the illustrated separate component 42 providing a connection means 421 for adapting into a respective receptive component 38 at the plate-like structure 32 or at a section of a joint type component.

The separate components 41, 42 each can be attached firmly by using screws which are not shown.

The connection interface 33 of a structure type component 3 for example in form of the separate component 41 further provides a flank 412 which surrounds the plate-like front of the connection interface peripherally. The peripheral flank 412 provides a cross section having a conically shape which results in a peripheral conical flank 45 when two connection interfaces in form of separate components 41, 42 adjoin each other coaxially, see longitudinal section view in figure 5b. The second separate component 42 which corresponds as a counter part to the first separate component 41 can be attached in the same way as in case of the first separate component 41 at the front of a plate like structure 32 of a structure type component for combining two separate structure type component along one common axis or can be attached firmly to a section 21, 22 of a joint type component as described below. In all cases of a possible combination of two coaxially adjoining separate connection interfaces 41, 42, a clamp ring device 4 ensures clamping of both connection interfaces respectively separate components 41, 42 in which the clamp ring device 4 provides at least two clamp ring sections 43, 43' each having a nut like recess 431, into which the conical flank 44 protrudes. The two clamp ring sections 43, 43' can be connected firmly by screws 45. Axial pins 413 at the one component 41 protrudes in corresponding recesses 423 at the other component 42 to ensure turning resistance in case of connection.

The separate components 41, 42 provides a central recess into which an electrical contact device 46, 46' can be inserted for enabling an electrical contact between components to which the connection interfaces belong, when two connection interfaces are mechanically connected by the clamp ring device 4, shown in the perspective view of figure 5a. Preferably all the components shown in figures 5 a - d are made of light weight metal material, preferably made of aluminum, beside of the electrical component 46, 46'.

It is also possible to realize the connection interface in a one piece construction, i.e. the connection interface 33 having the shape of one of the separate components 41 or 42 shown in figures 5 a -d is integrally connected with the plate-like structure 32 of the structure type component 3. On the other hand the connection interface of a joint type component 2 is integrally connected with each section of the joint type component as will be described below. The one piece construction will be carried out by a generative manufacturing process preferably.

Figure 4 shows as mentioned before a detailed view of the plate-like structure 32 of a structure type component 3 providing four elongated structural elements 31 which are fixed at the plate-like structure 32 with screws 35. Further at one rim of the plate-like structure 32 a so called re-directing element 5 is attached for guiding the cable 12 (not shown) from an actuator type component 1 to a joint type component 2 (also not shown). The re-directing element 5 provides a connection interface 51 adapted for releasable fixing to the rim of the plate-like structure 32. Further the re-directing element 5 provides a pulley 52 for guiding the at least one cable running between the actuator and a joint type component. The pulley 52 is rotatably mounted around an axis of rotation which is fixedly arranged in the re-directing element 5. It is also possible to combine the re-directing element 5 with a compliant element, like a spring, not shown, such that, when tension is applied in the tension transmitting element the spring is loaded and the pulley is deflected along a linear direction, preferably perpendicular to the direction of the elongated structural elements 31. Hereby the tension forces transmitted along the cable obtain a degree of variability, by which the robot system receive a degree of compliance.

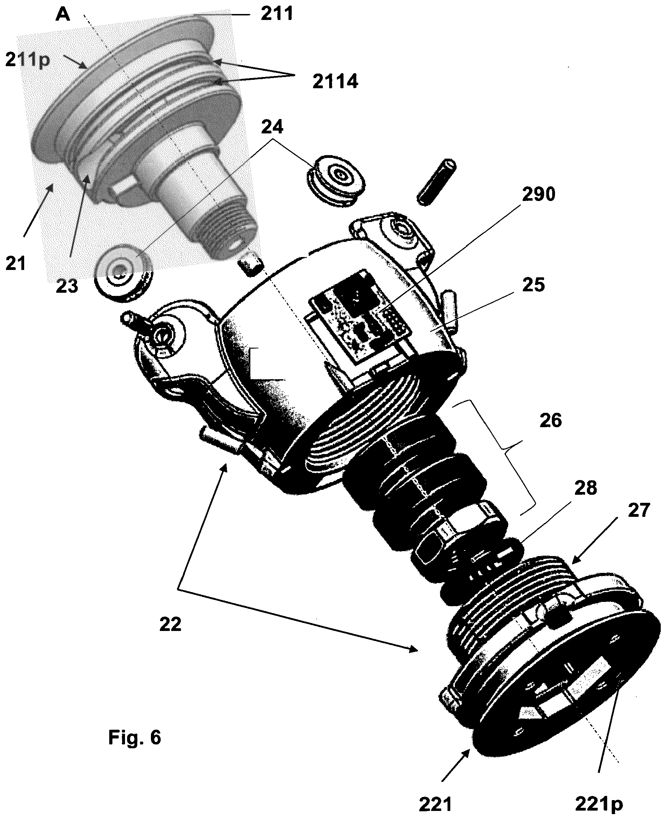

Fig. 6 shows a joint like component 2 which enables rotation about a longitudinal axis A. The joint like component 2 provides two sections 21, 22 which are arranged rotatable relative to each other about the axis of rotation A. The first section 21, which is shown in the upper part of figure 6, provides in one piece manufacturing a connection interface 211 having the peripheral flank 412, as described before, and a plane front side 211p. Further the first section 21 provides a circular periphery 2114 being centered around the axis of rotation A. The cable 12, not shown, is at least partially guided along the circular periphery 2114 and being fixed at its end by the fixing means 23 on said section 21. The fixing means 23 provides a conical recess into which a conical counterpart is insertable for fixing the end of the cable. The first section 21 is rotably mounted within the housing 25 of the second section 22 by means of pivot bearings 26. Further a second connection interface 221, which is integrally connected with the second section 22, provides a peripheral flank 221 and a plane front side 221p, which can be connected firmly with the housing 25 by a screw caps 27. Both front planes 211p and 221p are orientated parallel to each other so that components which are connected at the connection interface 211, 221 can be pivoted about the axis of rotation A. For a controlled activation of rotational movement at least two separate cables interacts with the first section 21 of the joint 2. Each of the cables is fed over guide rollers 28 to the first section 21. Depending on the concerted tensile forces acting on the section 21 via both cables, section 21 can be turned clockwise or counter clockwise relative to the second section 22 of the joint component 2. The tensile forces along each cable will be controlled by two separate actuators, which are firmly attached along a structure type component which is connected at the connection interface 221 of section 22 of the joint type component 2.

Further a sensor unit 29 for sensing the angle of rotation is provided within the joint type component 2, so that position information can be transmitted by wire or wireless to a control unit 290 which is preferably attached at the outside of the housing 25.

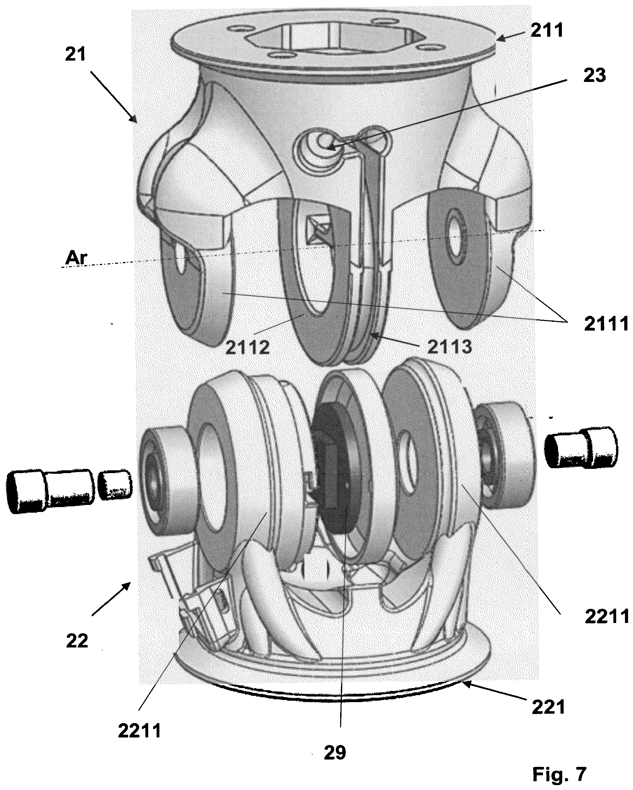

A second embodiment of a joint type component 2 is illustrated in figure 7 which allows rotational movement about an axis of rotation Ar which is oriented orthogonally to the longitudinal extension of two structural type components being connected by such kind of joint like in case of figure 1. Such kind of joint provides two joint sections 21, 22, preferably each joint section 21, 22 provides an integrally connected connection interface 211, 221. Both sections 21, 22 provides two prong-like extensions 2111, 2211 oriented parallel to each other such that the prong-like extensions 2111, 2211 engage each other and being rotably mounted around the axis of rotation Ar which intersects all prong-like extensions 2111, 2211 orthogonally to their parallel extension. Further the section 21 of the joint 2 provides between both prong-like extensions 2111 a middle arranged prong-like extension 2112 which is in form of a disc-like structure having a circular periphery 2113 which is centered around the axis of rotation Ar and along which the cable (which is not shown) is guided partially so that the transmitted tension force have a constant lever arm with respect to the axis of rotation Ar, in which one end of the cable is fixed by the fixing means 23 on the upper section 21.

As well like in case of the before described joint, two separate cables can be fixed at the section 21 so that opposing rotational forces respectively momentums about the axis of rotation Ar can act on section 21.

A positioning sensor 29 is integrated into the joint 2 preferably for measuring the position of deflection of the joint 2.

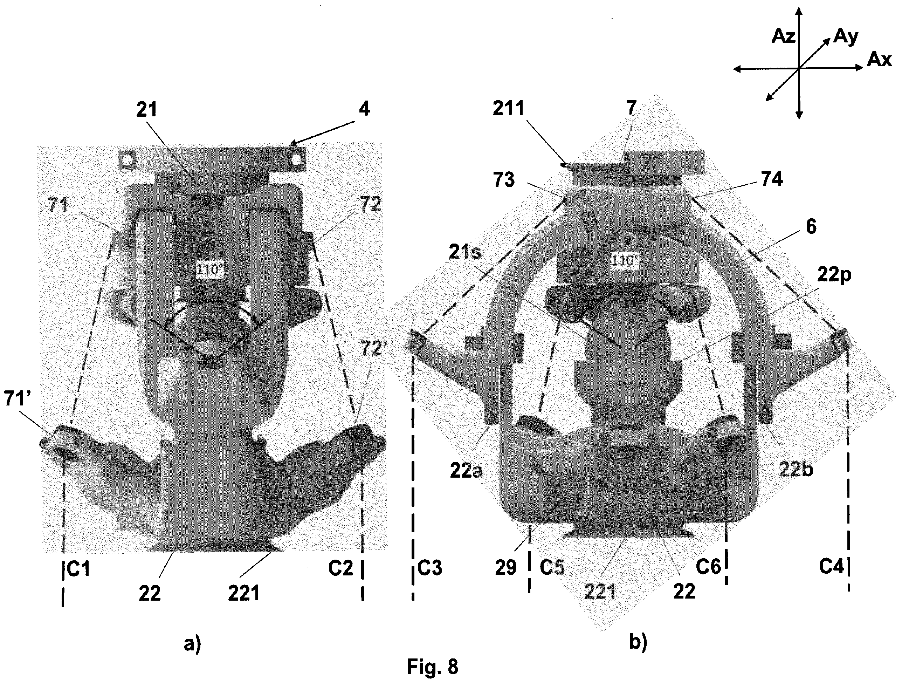

A third type of joint 2 is illustrated in figures 8a, b which shows a type of joint which allows relative movement around three mutually perpendicular axis Ax, Ay, Az. Figure 8 shows perspective side views of the joint 2 from two different view angles. The joint provides a first section 21 and a second section 22. At each section a connection interface 211 and 221 is integrally connected. The second section 22 of the joint 2 provides a fork-like structure with two prong-like extensions 22a, 22b which are oriented parallel to each other. At the end of each prong-like extension 22a, 22b a semicircular guiding element 6 is mounted rotatable around the axis Ax. A sliding element 7 is bi-directional slidably mounted on the semicircular guiding element 6 around the axis Ay which is associated with the semicircular guiding element 6. Further the first section 21 is mounted rotably around the third axis Az on the sliding element 7, in which the third axis Az is orthogonally to the first and second axis Ax and Ay. The first section 21 further provides a spherical element 21s which is slidably supported on a pan-shaped contour 22p of the section 22.

For a controlled deflection of the first section 21 relative to the second section 22 around the three mutually perpendicular axis Ax, Ay, Az six separate cables C1, C2, C3, C4, C5, C6 are necessary, in which each of which are activated by a separate actuator. For a bi-directional deflection of section 21 relative to section 22 around the first axis Ax a first pair of cables C1, C2 are necessary which upper ends are fixed at fixing means 71, 72 which are attached to opposite sides on the sliding element 7. For an orderly cable feeding eyelets 71', 72' are attached at the second section 22 through which the cables C1, C2 are fed.

For a controlled deflection of the first section 21 relative to the second section 22 around the second axis Ay a second pair of cables C3, C4 is provided which upper ends are fixed at two fixing means 73, 74 onto opposite sides at the sliding element 7.

Finally a third pair of cables C5 and C6 are provided for rotational movement of the first section 21 relative to section 22 about the third axis AZ. The upper ends of the third pair of cables C5, C6 are fixed on the first section 21 directly which provides a circular periphery (not shown in figure 8) being centered around the third axis of rotation Az and along which the cables C5 and C6 are guided at least partially. Each of the before described cables C1 to C6 are connected with a separate actuator which is firmly fixed at a structure type component 2 which is connected to the connection interface 221 of the second section 22.

Further a control board 29 is attached on the second section 2 for a control of electrical signals generated for example by angle sensors integrated in the joint 2 for measurement purposes of position of deflection.

All the before described components of the inventive modular robotic kit can be provided in a huge variety of sizes and shapes so that individual robot systems are realizable in a low cost and short time way.

The research that led to these results were supported by the European Union.

### • List of References Numbers

- 1: Actuator type component
- 11: motor driven shaft
- 12: tension transmitting element, cable
- 13: compliant element
- 14: re-directing element
- 15: mechanical interface
- 16: housing
- 17: electric motor, step motor
- 18, 19: pulley
- 2: joint type component
- 2a: single pivot joint
- 21, 22: section
- 22a, 22b: prong-like extension
- 21s: spherical member
- 22p: pan-like support structure
- 211, 221: connection interface
- 211p, 221p: connection plain
- 2112: disc-like structure
- 2113: circular periphery
- 2114: circular periphery
- 23: fixing means
- 24: guiding roller
- 25: housing
- 26: means of pivot bearing
- 27: screw caps
- 28: sensor
- 29: control board
- 290: control unit
- 3: structure type component
- 3a: first robot arm
- 3b: second robot arm
- 31: elongated structured profile
- 32: plate-like structure
- 33: connection interface
- 34: spacer element
- 35: screw
- 36: hole
- 37: hole
- 38: receptive structure
- 4: clamp ring device
- 41, 42: separate component
- 412, 422: peripheral flank
- 413: pin
- 423: recess
- 43, 43': clamp ring sections
- 431: nut-like recess
- 44: conical flank
- 45: screw
- 46: electrical contact device
- 5: re-directing element
- 51: connection interface
- 52: pulley
- 6: semicircular guiding element
- 7: sliding-element
- 71, 72, 73, 74: fixing means
- C1, C2, C3, C4, C5, C6: cable
- 22a, 22b: prong-like extension
- AX: first rotational axis
- AY: second rotational axis
- AZ: third rotational axis

## Claims

1. Modular robotic kit containing a set of components each of which is assignable into one of at least three different functional groups in which the first functional group contains at least one type of an actuator (1), the second functional group contains at least one type of a joint (2) and the third functional group contains at least one type of a structure (3), wherein
the actuator type component (1) contains at least one motor driven shaft (11), at which at least one end of a tension transmitting element (12), like a cable, is fixed for up- and unrolling at least of a section of the tension transmitting element (12) around the shaft (11), and at least one mechanical interface (15) to attach the actuator type component (1) on the structure type component (3),
the joint type component (2) has two sections (21, 22) providing each at least one connection interface (211, 221) and being arranged relative to each other by having one up to three degrees of freedom of rotation and zero up to one degree of freedom of translation between the both sections (21, 22), at least one of the both sections (21) provides a fixing means (23) for fixing at least one section of the tension transmitting element (12) of an actuator type component and said connection interfaces (211, 221) being adapted for a releasable and direct or indirect connection with the connection interface (211, 221) of another joint (2) or with a connection interface (33) of a structure type component (3), and
the structure type component (3) contains a rigid support structure having at least two ends, at each end a plate like structure (32) is arranged at which the connection interface (33) is provided for a releasable and direct or indirect connection with the
connection interface (211, 221) of a joint type component (2) or another structure type component (3), and the rigid support structure provides at least one mechanical interface for connecting with the mechanical interface (15) of the actuator type component (1).

2. Modular robotic kit according to claim 1,
wherein a compliant element (13) is arranged and configured such that tension in the tension transmitting element results in an elastic deformation of the compliant element (13);
and secondly wherein the compliant element (13) is being part of the actuator type component (1) and/or the tension transmission element (12),
or wherein the compliant element (13) is being a separate component providing a fixing mechanism for a releasable attachment on the actuator type component (1), the structure type component (3) and/or the joint type (2) component.

3. Modular robotic kit according to claim 2,
wherein the actuator type component (1) provides at least one redirecting element (14) guiding the tension transmitting element (12) towards at least one joint (2), and the compliant element (13) is implemented as an elastic element, preferably a spring, being connected with the redirecting element (14) in the form of a pulley.

4. Modular robotic kit according to one of the claims 1 to 3,
wherein the rigid support structure of the structure type component (3) contains at least one elongated structural profiles (31), in case of at least two elongated structural profiles (31) at least one spacer element (34) is releasably connected with the at least two elongated structural profiles (31), in which the spacer element (34) is of rigid material to establish a rigid support between the at least two elongated structural profiles (31) in an orthogonal direction towards a longitudinally extension of the elongated structural profiles (31).

5. Modular robotic kit according to one of the claims 1 to 4,
wherein the connection interface (211, 221) of the joint type component (2) and the connection interface (33) of the structure type component (3) each provides a peripheral flange (412, 422), which results in a peripheral conical flange (45) when two connections interfaces (211, 221,33) adjoin each other, and
a clamp ring device (4) ensures clamping of both connection interfaces (211, 221, 33), in which said clamp ring device provides at least two clamp ring sections (46, 46') each having a nutlike recess (461) into which the conical flange (45) protrudes.

6. Modular robotic kit according to claim 5,
wherein the connection interface (211, 221) of the joint type component (2) and/or the connection interface (33) of the structure type component (3) is a separate component (41, 42) each having a connection means (411, 421) for connecting with the plate like structure (32) of the structure type component (3) or with the sections (21, 22) of the joint type component (2), or
wherein the connection interface (211, 221) of the joint type component (2) is integrally connected each with the two sections (21, 22) and/or the connection interface (33) of the structure type component (3) is integrally connected with the plate like structure (32) of the structure type component (3).

7. Modular robotic kit according to one of the claims 1 to 6,
wherein the connection interfaces (33, 211, 221) of the structure type component (3) and the joint type component (2) include at least one electrical contact device (47, 47') for enabling an electrical contact between the components (2, 3) to which the connection interface (33, 211, 221) belong, when the two connection interfaces (33, 211, 221) are mechanically connected.

8. Modular robotic kit according to one of the claims 1 to 7,
wherein the one and the other section (21, 22) of the joint (2) provide a fork-like structure, each of which has at least two prong-like extensions (2111, 2211) oriented parallel to each other,
the one and the other section (21, 22) of the joint (2) are arranged such that the prong-like extensions (2111, 2211) of each of the two sections (21, 22) engage with each other and are rotatably mounted around an axis of rotation (A) which intersects all prong-like extensions (2111, 2211) orthogonally to their parallel extension.

9. Modular robotic kit according to claim 8,
wherein one of the two sections (21) has three prong-like extensions, the middle arranged prong-like extension of the three provides at least partially a disk-like structure (2112) with a circular periphery (2113) which is centered around the axis of rotation (A) and along which the tension transmitting element (12) is guided partially so that the transmitted tension force has a constant lever arm with respect to the joint axis, and the other end of the tension transmitting element (12) is fixed by the fixing means (23) on said section (21), and the two outer arranged prong-like extension (2111) engage rotatably with the prong-like extensions (2211) of the other section (22).

10. Modular robotic kit according to claim 9,
wherein an end of a second tension transmitting element (12) being actuated from a separate actuator type component (1) is guided along the circular periphery (2113) of said disk-like structure (2112) and being fixed by a separate fixing means (23') on said section (21), so that along both tension transmitting elements (12) tensile forces can act onto said disk-like structure (2112) in opposite orientation around the axis of rotation (A).

11. Modular robotic kit according to one of the claims 1 to 7,
wherein the connection interface (211, 221) of the one and the other section (21, 22) of the joint (2) each defines a connection plane (211p, 221p), which are oriented parallel to each other,
the one and the other section (21, 22) is rotatably mounted around an axis of rotation (A) intersecting both connection planes (211p, 221p) orthogonally and
one of both sections (21) provides a circular periphery (2114) being centered around the axis of rotation (A) and along which the tension transmitting element (12) is guided at least partially and the other end of the tension transmitting element (12) is fixed by the fixing means (23) on said section (21).

12. Modular robotic kit according to claim 11,
wherein an end of a second tension transmitting element (12) being actuated from a separate actuator type component is guided along the circular periphery (2114) and fixed by a separate fixing means (23') on said section (21), so that along both tension transmitting elements (12) tensile forces can act onto said section (21) in opposite orientation around the axis of rotation (A).

13. Modular robotic kit according to the claims 1 to 6.
wherein the one and the other section (21, 22) of the joint (2) are arranged and configured for enabling relative movement around three mutually perpendicular axes, wherein one of the two sections (21, 22) of the joint (2) provides a fork-like structure with two prong-like extensions oriented parallel to each other, at which ends a semicircular guiding element is mounted rotatable around a first axis,
wherein a sliding element is bidirectional slidably mounted on the semicircular guiding element associated with a circular axis, the so called second axis, which is orthogonally to the first axis,
wherein the other of the two sections (21, 22) is mounted rotatably around a third axis on the sliding element, in which the third axis is orthogonally to the first and second axis,
wherein at least one tension transmitting element (12) being actuated from an actuator type component is unilaterally fixed at the sliding element for moving the sliding element along the semicircular guiding element around the second axis,
wherein at least one further tension transmitting element (12) being actuated from a further actuator type component is unilaterally fixed at the sliding element for pivoting the sliding element together with the semicircular guiding element around the first axis and
wherein at least one further tension transmitting element (12) being actuated from a further actuator type component is unilaterally fixed at the other of the two sections (21, 22) providing a circular periphery being centered around the third axis and along which the tension transmitting element (12) is guided at least partially.

14. Use of the modular robotic kit according to one of the claims 1 to 13 for building a robotic system having a serial and/or parallel kinematic structure being activated by at least one tension transmitting element (12), preferably by cable or belt.

15. Method for producing a robotic system having a serial and/or parallel kinematic structure being activated by a least one tension transmitting element comprising the following steps:
- providing a set of actuator type components (1), joint type components (2) and structure type components (3) according to one of the claims 1 to 13;
- selecting at least one component of each set and joining the selected actuator type component (1) on the selected structure type component (3) and connecting the connection interface (211, 221) of the selected joint type component (2) with the connection interface (33) of the plate like structure (32) of the selected structure type component (3),
- fixing the tension transmitting element (12) between the actuator type component (1) and the joint type component (2) for transmitting tension forces between both components (1, 2).

16. Method for producing a robotic system having a serial and/or parallel kinematic structure being activated by a least one tension transmitting element comprising the following steps:
- providing a set of actuator type components (1), joint type components (2) and structure type components (3) according to one of the claims 1 to 8,
- selecting at least one component of each set and joining the selected actuator type component (1) on the selected structure type component (3) and connecting a first connection interface (211, 221) of the selected joint type component (2) with the connection interface (33) of the plate like structure (32) of the selected structure type component (3),
- selecting a second structure type component (3) and connecting a second connection interface (211, 221) of the selected joint type component (2) with the connection interface (33) of the plate like structure (32) of the selected second structure type component (3),
- fixing the tension transmitting element (12) between the actuator type component (1) and the second structure type component (3) for transmitting tension forces between both components.

17. Method according to claim 15 or 16,
wherein providing a second actuator type component (1'), joining the second actuator type component on said selected structure type component (3) and fixing a second tension transmitting element (12') between the second actuator type component (1') and the joint type component (2) or the second structure type component (3) such that a counter tension forces act on both components.

## Patentansprüche

1. Modulares Roboterkit, das eine Reihe von Komponenten enthält, wobei jede zu einer von mindestens drei unterschiedlichen Funktionsgruppen zuweisbar ist, in denen die erste Funktionsgruppe mindestens eine Art von einem Aktor (1) enthält, die zweite Funktionsgruppe mindestens eine Art von einem Gelenk (2) enthält und die dritte Funktionsgruppe mindestens eine Art von einer Struktur (3) enthält, wobei
die Aktorkomponente (1) mindestens eine motorbetriebene Welle (11), an der mindestens ein Ende eines Zugübertragungselements (12) wie ein Seil zum Auf- und Abwickeln von mindestens einem Abschnitt des Zugübertragungselements (12) um die Welle (11) herum befestigt ist, und mindestens eine mechanische Schnittstelle (15) zum Befestigen der Aktorkomponente (1) an der Strukturkomponente (3) enthält,
wobei die Gelenkkomponente (2) zwei Abschnitte (21, 22) aufweist, von denen jeder mindestens eine Verbindungsschnittstelle (211, 221) bereitstellt und die relativ zueinander angeordnet sind, indem sie ein bis zu drei Drehungsfreiheitsgrade und null bis zu einem Translationsfreiheitsgrad zwischen den beiden Abschnitten (21, 22) aufweisen, mindestens einer von den beiden Abschnitten (21) ein Befestigungsmittel (23) zum Befestigen von mindestens einem Abschnitt des Zugübertragungselements (12) einer Aktorkomponente bereitstellt und die Verbindungsschnittstellen (211, 221) für eine lösbare und direkte oder indirekte Verbindung mit der Verbindungsschnittstelle (211, 221) eines anderen Gelenks (2) oder mit einer Verbindungsschnittstelle (33) einer Strukturkomponente (3) angepasst sind und
die Strukturkomponente (3) eine starre Stützstruktur mit mindestens zwei Enden enthält und an jedem Ende eine plattenförmige Struktur (32) angeordnet ist, an der die Verbindungsschnittstelle (33) für eine lösbare und direkte oder indirekte Verbindung mit der Verbindungsschnittstelle (211, 221) einer Gelenkkomponente (2) oder einer anderen Strukturkomponente (3) angeordnet ist, und die starre Stützstruktur mindestens eine mechanische Schnittstelle zum Verbinden mit der mechanischen Schnittstelle (15) der Aktorkomponente (1) bereitstellt.

2. Modulares Roboterkit nach Anspruch 1,
wobei ein nachgiebiges Element (13) derart angeordnet und konfiguriert ist, dass Zug im Zugübertragungselement in einer elastischen Verformung des nachgiebigen Elements (13) resultiert;
und wobei zweitens das nachgiebige Element (13) Teil der Aktorkomponente (1) und/oder des Zugübertragungselements (12) ist,
oder wobei das nachgiebige Element (13) eine separate Komponente ist, die einen Befestigungsmechanismus für eine lösbare Befestigung an der Aktorkomponente (1), der Strukturkomponente (3) und/oder der Gelenkkomponente (2) bereitstellt.

3. Modulares Roboterkit nach Anspruch 2,
wobei die Aktorkomponente (1) mindestens ein Umlenkelement (14) bereitstellt, welches das Zugübertragungselement (12) in Richtung von mindestens einem Gelenk (2) lenkt und das nachgiebige Element (13) als ein elastisches Element, bevorzugt eine Feder, implementiert ist, das mit dem Umlenkelement (14) in der Form einer Umlenkrolle verbunden ist.

4. Modulares Roboterkit nach einem der Ansprüche 1 bis 3, wobei die starre Stützstruktur der Strukturkomponente (3) mindestens ein längliches Strukturprofil (31) enthält, im Falle von mindestens zwei länglichen Strukturprofilen (31) mindestens ein Abstandselement (34) mit den mindestens zwei länglichen Strukturprofilen (31) lösbar verbunden ist, wobei das Abstandselement (34) aus starrem Material besteht, um eine starre Abstützung zwischen den mindestens zwei länglichen Strukturprofilen (31) in einer Richtung orthogonal zu einer Längsausdehnung der länglichen Strukturprofile (31) herzustellen.

5. Modulares Roboterkit nach einem der Ansprüche 1 bis 4, wobei die Verbindungsschnittstelle (211 221) der Gelenkkomponente (2) und die Verbindungsschnittstelle (33) der Strukturkomponente (3) jeweils einen peripheren Flansch (412, 422) bereitstellen, der in einer peripheren konischen Flanke (44) resultiert, wenn zwei Verbindungsschnittstellen (211, 221, 33) aneinander angrenzen, und
eine Klemmringvorrichtung (4) das Klemmen von beiden Verbindungsschnittstellen (211, 221, 33) sicherstellt, wobei die Klemmringvorrichtung mindestens zwei Klemmringabschnitte (46, 46') bereitstellt, von denen jeder eine nutartige Aussparung (431) aufweist, in die die konische Flanke (44) ragt.

6. Modulares Roboterkit nach Anspruch 5,
wobei die Verbindungsschnittstelle (211, 221) der Gelenkkomponente (2) und/oder die Verbindungsschnittstelle (33) der Strukturkomponente (3) eine separate Komponente (41, 42) ist, von denen jede Verbindungsmittel (411, 421) zum Verbinden mit der plattenförmigen Struktur (32) der Strukturkomponente (3) oder mit den Abschnitten (21, 22) der Gelenkkomponente (2) aufweist, oder
wobei die Verbindungsschnittstelle (211, 221) der Gelenkkomponente (2) jeweils mit den zwei Abschnitten (21, 22) einstückig verbunden ist und/oder die Verbindungsschnittstelle (33) der Strukturkomponente (3) mit der plattenförmigen Struktur (32) der Strukturkomponente (3) einstückig verbunden ist.

7. Modulares Roboterkit nach einem der Ansprüche 1 bis 6, wobei die Verbindungsschnittstellen (33, 211, 221) der Strukturkomponente (3) und der Gelenkkomponente (2) mindestens eine elektrische Kontaktvorrichtung (47, 47') umfassen, zum Ermöglichen eines elektrischen Kontaktes zwischen den Komponenten (2, 3), zu denen die Verbindungsschnittstellen (33, 211, 221) gehören, wenn die zwei Verbindungsschnittstellen (33, 211, 221) mechanisch verbunden sind.

8. Modulares Roboterkit nach einem der Ansprüche 1 bis 7,
wobei der eine und der andere Abschnitt (21, 22) des Gelenks (2) eine gabelartige Struktur bereitstellen, von denen jede mindestens zwei zinkenartige Erweiterungen (2111, 2211) aufweist, die parallel zueinander ausgerichtet sind,
der eine und der andere Abschnitt (21, 22) des Gelenks (2) derart angeordnet sind, dass die zinkenartigen Erweiterungen (2111, 2211) von jedem der zwei Abschnitte (21, 22) ineinander greifen und um eine Drehachse (A) herum drehbar befestigt sind, die alle zinkenartigen Erweiterungen (2111, 2211) orthogonal zu ihrer parallelen Ausdehnung schneidet.

9. Modulares Roboterkit nach Anspruch 8,
wobei einer der zwei Abschnitte (21) drei zinkenartige Erweiterungen aufweist, die in der Mitte der drei angeordnete zinkenartige Erweiterung mindestens teilweise eine scheibenartige Struktur (2112) mit einem kreisförmigen Umfang (2113) bereitstellt, der um die Drehachse (A) herum zentriert ist und entlang dessen das Zugübertragungselement (12) teilweise geführt wird, sodass die übertragene Zugkraft einen konstanten Hebelarm in Bezug auf die Gelenkachse aufweist, und das andere Ende des Zugübertragungselements (12) durch das Befestigungsmittel (23) an dem Abschnitt (21) befestigt ist, und die zwei außen angeordneten zinkenartigen Erweiterungen (2111) drehbar in die zinkenartigen Erweiterungen (2211) des anderen Abschnitts (22) eingreifen.

10. Modulares Roboterkit nach Anspruch 9,
wobei ein Ende eines zweiten Zugübertragungselements (12), das von einer separaten Aktorkomponente (1) betätigt wird, entlang dem kreisförmigen Umfang (2113) der scheibenartigen Struktur (2112) gelenkt wird und durch ein separates Befestigungsmittel (23') an dem Abschnitt (21) befestigt ist, sodass entlang von beiden Zugübertragungselementen (12) Zugkräfte auf die scheibenartige Struktur (2112) in entgegengesetzter Richtung um die Drehachse (A) herum wirken können.

11. Modulares Roboterkit nach einem der Ansprüche 1 bis 7, wobei die Verbindungsschnittstelle (211, 221) des einen und des anderen Abschnitts (21, 22) des Gelenks (2) jeweils eine Verbindungsebene (211p, 221p) definiert, die parallel zueinander ausgerichtet sind,
der eine und der andere Abschnitt (21, 22) um eine Drehachse (A) herum drehbar befestigt ist, die beide Verbindungsebenen (211p, 221p) orthogonal schneidet, und
einer von beiden Abschnitten (21) einen kreisförmigen Umfang (2114) bereitstellt, der um die Drehachse (A) herum zentriert ist und entlang dessen das Zugübertragungselement (12) mindestens teilweise gelenkt wird, und das andere Ende des Zugübertragungselements (12) durch das Befestigungsmittel (23) an dem Abschnitt (21) befestigt ist.

12. Modulares Roboterkit nach Anspruch 11,
wobei ein Ende eines zweiten Zugübertragungselements (12), das von einer separaten Aktorkomponente betätigt wird, entlang dem kreisförmigen Umfang (2114) gelenkt wird und durch ein separates Befestigungsmittel (23') an dem Abschnitt (21) befestigt ist, sodass entlang von beiden Zugübertragungselementen (12) Zugkräfte auf den Abschnitt (21) in entgegengesetzter Richtung um die Drehachse (A) herum wirken können.

13. Modulares Roboterkit nach den Ansprüchen 1 bis 6.
wobei der eine und der andere Abschnitt (21, 22) des Gelenks (2) zum Ermöglichen einer Relativbewegung um drei zueinander senkrechte Achsen angeordnet und konfiguriert sind,
wobei einer der zwei Abschnitte (21, 22) des Gelenks (2) eine gabelartige Struktur mit zwei zinkenartigen Erweiterungen bereitstellt, die parallel zueinander ausgerichtet sind, an deren Enden ein halbkreisförmiges Führungselement drehbar um eine erste Achse herum befestigt ist,
wobei ein Schiebeelement bidirektional verschiebbar auf dem halbkreisförmigen Führungselement befestigt ist, dem eine Kreisachse zugeordnet ist, die zur ersten Achse orthogonal ist,
wobei der andere der zwei Abschnitte (21, 22) um eine dritte Achse herum drehbar an dem Schiebeelement befestigt ist, wobei die dritte Achse zur ersten und zweiten Achse orthogonal ist,
wobei mindestens ein Zugübertragungselement (12), das von einer Aktorkomponente betätigt wird, zum Bewegen des Schiebeelements entlang dem halbkreisförmigen Führungselement um die zweite Achse herum einseitig an dem Schiebeelement befestigt ist,
wobei mindestens ein weiteres Zugübertragungselement (12), das von einer weiteren Aktorkomponente betätigt wird, einseitig an dem Schiebeelement zum Schwenken des Schiebeelements zusammen mit dem halbkreisförmigen Führungselement um die erste Achse herum befestigt ist, und
wobei mindestens ein weiteres Zugübertragungselement (12), das von einer weiteren Aktorkomponente betätigt wird, einseitig an dem anderen der zwei Abschnitte (21, 22) befestigt ist und einen kreisförmigen Umfang bereitstellt, der um die dritte Achse zentriert ist und entlang dessen das Zugübertragungselement (12) mindestens teilweise gelenkt wird.

14. Verwendung des modularen Roboterkits nach einem der Ansprüche 1 bis 13 zum Bilden eines Robotersystems mit einer seriellen und/oder parallelen kinematischen Struktur, die durch mindestens ein Zugübertragungselement (12), bevorzugt durch Seil oder Riemen, aktiviert wird.

15. Verfahren zum Herstellen eines Robotersystems mit einer seriellen und/oder parallelen kinematischen Struktur, die durch mindestens ein Zugübertragungselement aktiviert wird, das die folgenden Schritte umfasst:
- Bereitstellen eines Satzes von Aktorkomponenten (1), Gelenkkomponenten (2) und Strukturkomponenten (3) nach einem der Ansprüche 1 bis 13;
- Auswählen von mindestens einer Komponente jedes Satzes und Anfügen der ausgewählten Aktorkomponente (1) an der ausgewählten Strukturkomponente (3) und Verbinden der Verbindungsschnittstelle (211, 221) der ausgewählten Gelenkkomponente (2) mit der Verbindungsschnittstelle (33) der plattenförmigen Struktur (32) der ausgewählten Strukturkomponente (3),
- Befestigen des Zugübertragungselements (12) zwischen der Aktorkomponente (1) und der Gelenkkomponente (2) zum Übertragen von Zugkräften zwischen beiden Komponenten (1, 2).

16. Verfahren zum Herstellen eines Robotersystems mit einer seriellen und/oder parallelen kinematischen Struktur, die durch mindestens ein Zugübertragungselement aktiviert wird, das die folgenden Schritte umfasst:
- Bereitstellen eines Satzes von Aktorkomponenten (1), Gelenkkomponenten (2) und Strukturkomponenten (3) nach einem der Ansprüche 1 bis 8,
- Auswählen von mindestens einer Komponente jedes Satzes und Anfügen der ausgewählten Aktorkomponente (1) an der ausgewählten Strukturkomponente (3) und
- Verbinden einer ersten Verbindungsschnittstelle (211, 221) der ausgewählten Gelenkkomponente (2) mit der Verbindungsschnittstelle (33) der plattenförmigen Struktur (32) der ausgewählten Strukturkomponente (3),
- Auswählen einer zweiten Strukturkomponente (3) und Verbinden einer zweiten Verbindungsschnittstelle (211, 221) der ausgewählten Gelenkkomponente (2) mit der Verbindungsschnittstelle (33) der plattenförmigen Struktur (32) der ausgewählten zweiten Strukturkomponente (3),
- Befestigen des Zugübertragungselements (12) zwischen der Aktorkomponente (1) und der zweiten Strukturkomponente (3) zum Übertragen der Zugkräfte zwischen beiden Komponenten.

17. Verfahren nach Anspruch 15 oder 16,
wobei das Bereitstellen einer zweiten Aktorkomponente (1'), das Anfügen der zweiten Aktorkomponente an der ausgewählten Strukturkomponente (3) und das Befestigen eines zweiten Zugübertragungselements (12') zwischen der zweiten Aktorkomponente (1') und der Gelenkkomponente (2) oder der zweiten Strukturkomponente (3) derart erfolgt, dass an beiden Komponenten Gegenzugkräfte wirken.

## Revendications

1. Kit robotique modulaire contenant un ensemble de composants dont chacun est assignable à un d'au moins trois groupes fonctionnels différents dans lesquels le premier groupe fonctionnel contient au moins un type d'un actionneur (1), le second groupe fonctionnel comprend au moins un type d'un joint (2) et le troisième groupe fonctionnel contient au moins un type d'une structure (3), dans lequel
le composant de type actionneur (1) contient au moins un arbre entraîné par un moteur (11), au niveau duquel au moins une extrémité d'un élément de transmission de tension (12), comme une corde, est fixée pour enrouler et dérouler au moins une section de l'élément de transmission de tension (12) autour de l'arbre (11) et au moins une interface mécanique (15) pour fixer le composant de type actionneur (1) sur le composant de type structure (3),
le composant de type joint (2) a deux sections (21,22) fournissant chacune au moins une interface de raccordement (211,221) et étant disposées l'une par rapport à l'autre afin d'avoir un jusqu'à trois degrés de liberté de rotation et zéro jusqu'à un degré de liberté de translation entre les deux sections (21,22), au moins une des deux sections (21) fournit un moyen de fixation (23) pour fixer au moins une section de l'élément de transmission de tension (12) d'un composant de type actionneur et lesdites interfaces de raccordement (211,221) étant adaptées pour un raccordement réversible et direct ou indirect avec l'interface de raccordement (211,221) d'un autre joint (2) ou avec une interface de raccordement (33) d'un composant de type structure (3) et
le composant de type structure (3) contient une structure de soutien rigide ayant au moins deux extrémités, au niveau de chaque extrémité une structure de type plaque (32) est disposée au niveau de laquelle l'interface de raccordement (33) est fournie en vue d'un raccordement réversible et direct ou indirect avec l'interface de raccordement (211,221) d'un composant de type joint (2) ou d'un autre composant de type structure (3), et la structure de soutien rigide fournit au moins une interface mécanique pour le raccordement avec l'interface mécanique (15) du composant de type actionneur (1).

2. Kit robotique modulaire selon la revendication 1,
dans lequel un élément élastique (13) est disposé et configuré de sorte que la tension dans l'élément de transmission de tension provoque une déformation élastique de l'élément flexible (13) ;
et deuxièmement, dans lequel l'élément flexible (13) fait partie du composant de type actionneur (1) et/ou de l'élément de transmission de tension (12),
ou dans lequel l'élément flexible (13) est un composant séparé fournissant un mécanisme de fixation en vue d'une fixation réversible sur le composant de type actionneur (1), le composant de type structure (3) et/ou le composant de type joint (2).

3. Kit modulaire robotique selon la revendication 2,
dans lequel le composant de type actionneur (1) fournit au moins un élément de redirection (14) guidant l'élément de transmission de tension (12) vers au moins un joint (2), et l'élément flexible (13) est implémenté comme un élément élastique, de préférence un ressort, étant raccordé avec l'élément de redirection (14) sous la forme d'une poulie.

4. Kit robotique modulaire selon une des revendications 1 à 3,
dans lequel la structure de soutien rigide du composant de type structure (3) contient au moins un profilé structurel allongé (31), dans le cadre d'au moins deux profilés structurels allongés (31) au moins un élément d'écarteur (34) est raccordé de manière réversible avec les au moins deux profilés structurels allongés (31), dans lequel l'élément d'écarteur (34) est constitué d'un matériau rigide afin d'établir un soutien rigide entre les au moins deux profilés structurels allongés (31) dans une direction orthogonale vers une extension longitudinale des profilés structurels allongés (31).

5. Kit robotique modulaire selon une des revendications 1 à 4,
dans lequel l'interface de raccordement (211,221) du composant de type joint (2) et l'interface de raccordement (33) du composant de type structure (3) fournissent chacun une bride périphérique (412,422), qui résulte en un flanc conique périphérique (44) lorsque deux interfaces de raccordement (211,221,33) sont jointes l'une à l'autre, et
un dispositif de bague de serrage (4) garantit le serrage des deux interfaces de raccordement (211,221,33), dans lequel ledit dispositif de bague de serrage fournit au moins deux sections de bague de serrage (46,46') ayant chacune un évidement de type rainure (431) à l'intérieur duquel le flanc conique (44) dépasse.

6. Kit robotique modulaire selon la revendication 5,
dans lequel l'interface de raccordement (211,221) du composant de type joint (2) et/ou l'interface de raccordement (33) du composant de type structure (3) est un composant séparé (41,42) ayant chacun un moyen de raccordement (411,421) pour raccorder avec la structure de type plaque (32) du composant de type structure (3) ou avec les sections (21,22) du composant de type joint (2) ou
dans lequel l'interface de raccordement (211,221) du composant de type joint (2) est raccordée en un seul tenant avec chacune des deux sections (21,22) et/ou l'interface de raccordement (33) du composant de type structure (3) est raccordée en un seul tenant avec la structure de type plaque (32) du composant de type structure (3).

7. Kit robotique modulaire selon une des revendications 1 à 6,
dans lequel les interfaces de raccordement (33,211,221) du composant de type structure (3) et du composant de type joint (2) incluent au moins un dispositif de contact électrique (47,47') pour permettre un contact électrique entre les composants (2,3) auxquels appartient l'interface de raccordement (33,211,221), lorsque les deux interfaces de raccordement (33,211,221) sont raccordées mécaniquement.

8. Kit robotique modulaire selon une des revendications 1 à 7,
dans lequel l'une et l'autre section (21,22) du joint (2) fournit une structure de type fourche, dont chacune possède au moins deux extensions de type fourchon (2111,2211) orientées parallèlement l'une à l'autre, l'une et l'autre section (21,22) du joint (2) sont disposées de sorte que les extensions de type fourchon (2111,2211) de chacune des deux sections (21,22) viennent en prise l'une avec l'autre et soient montées relativement autour d'un axe de rotation (A) qui coupe en intersection toutes les extensions de type fourchon (2111,2211) orthogonalement à leur extension parallèle.

9. Kit robotique modulaire selon la revendication 8,
dans lequel une des deux sections (21) a trois extensions de type fourchon, l'extension de type fourchon disposée au centre des trois fournit au moins partiellement une structure de type disque (2112) avec une périphérie circulaire (2113) qui est centré autour de l'axe de rotation (A) et le long de laquelle l'élément de transmission de tension (12) est guidé partiellement de sorte que la force de tension transmise ait un bras de levier constant par rapport à l'axe de joint, et l'autre extrémité de l'élément de transmission de tension (12) est fixé par le moyen de fixation (23) sur ladite section (21), et les deux autres extensions de type fourchon disposées à l'extérieur (2111) viennent en prise rotativement avec les extensions de type fourchon de l'autre section (22) .

10. Kit robotique modulaire selon la revendication 9,
dans lequel une extrémité d'un second élément de transmission de tension (12) étant actionnée à partir d'un composant de type actionneur séparé (1) est guidée le long de la périphérie circulaire (2113) de ladite structure de type disque (2112) et étant fixée par un moyen de fixation séparé (23') sur ladite section (21), de sorte que le long des deux éléments de transmission de tension (12) des forces de traction puissent agir sur ladite structure de type disque (2112) dans une orientation opposée autour de l'axe de rotation (A).

11. Kit robotique modulaire selon une des revendications 1 à 7,
dans lequel l'interface de raccordement (211,221) de l'une et l'autre section (21,22) du joint (2) définissent chacune un plan de raccordement (211p,221p), qui sont orientés parallèlement l'un à l'autre,
l'une et l'autre section (21,22) est montée rotativement autour d'un axe de rotation (A) coupant en intersection orthogonalement les deux plans de raccordement (211p,221p) et
une des deux sections (21) fournit une périphérie circulaire (2114) étant centrée autour de l'axe de rotation (A) et le long de laquelle l'élément de transmission de tension (12) est guidée au moins partiellement et l'autre extrémité de l'élément de transmission de tension (12) est fixée par le moyen de fixation (23) sur ladite section (21).

12. Kit robotique modulaire selon la revendication 11,
dans lequel une extrémité d'un second élément de transmission de tension (12) étant actionnée à partir d'un composant de type actionneur séparé est guidée le long de la périphérie circulaire (2114) et fixée par un moyen de fixation séparé (23') sur ladite section (21), de sorte que le long des deux éléments de transmission de tension (12) des forces de traction puissent agir sur ladite section (21) dans une orientation opposée autour de l'axe de rotation (A).

13. Kit robotique modulaire selon les revendications 1 à 6,
dans lequel l'une et l'autre section (21,22) du joint (2) sont disposées et configurées pour permettre un mouvement relatif autour de trois axes mutuellement perpendiculaires,
dans lequel une des deux sections (21,22) du joint (2) fournit une structure de type fourche avec deux extensions de type fourchon orientées parallèlement l'une à l'autre, aux extrémités desquelles un élément de guidage semi-circulaire est monté de manière rotative autour d'un premier axe,
dans lequel un élément coulissant est monté de manière coulissante bidirectionnellement sur l'élément de guidage semi-circulaire associé à un axe circulaire, appelé second axe, qui est orthogonal au premier axe, dans lequel l'autre des deux sections (21,22) est montée rotativement autour d'un troisième axe sur l'élément coulissant, dans lequel le troisième axe est orthogonal au premier et au second axe,
dans lequel au moins un élément de transmission de tension (12) étant actionné à partir d'un composant de type actionneur est fixé unilatéralement au niveau de l'élément coulissant pour déplacer l'élément coulissant le long de l'élément de guidage semi-circulaire autour du second axe,
dans lequel au moins un élément de transmission de tension (12) supplémentaire étant actionné à partir d'un composant de type actionneur supplémentaire est fixé unilatéralement au niveau de l'élément coulissant pour pivoter l'élément coulissant conjointement à l'élément de guidage semi-circulaire autour du premier axe et
dans lequel au moins un élément de transmission de tension supplémentaire (12) étant actionné à partir d'un composant de type actionneur supplémentaire est fixé unilatéralement à l'autre des deux sections (21,22) fournissant une périphérie circulaire étant centré autour du troisième axe et le long de laquelle l'élément de transmission de tension (12) est guidé au moins partiellement.

14. Utilisation du kit robotique modulaire selon une des revendications 1 à 13 pour construire un système robotique ayant une structure cinématique sérielle et/ou parallèle étant activée par au moins un élément de transmission de tension (12), de préférence par corde ou courroie.

15. Procédé de production d'un système robotique ayant une structure cinématique sérielle et/ou parallèle étant activée par au moins un élément de transmission de tension comprenant les étapes suivantes :
- fournir un ensemble de composants de type actionneur (1), composants de type joint (2) et composants de type structure (3) selon une des revendications 1 à 13 ;
- sélectionner au moins un composant de chaque ensemble et joindre le composant de type actionneur sélectionné (1) sur le composant de type structure sélectionné (3) et raccorder l'interface de raccordement (211,221) du composant de type joint sélectionné (2) avec l'interface de raccordement (33) de la structure de type plaque (32) du composant de type structure sélectionné (3),
- fixer l'élément de transmission de tension (12) entre le composant de type actionneur (1) et le composant de type joint (2) pour transmettre des forces de tension entre les deux composants (1,2).

16. Procédé de production d'un système robotique ayant une structure cinématique sérielle et/ou parallèle étant activée par au moins un élément de transmission de tension comprenant les étapes suivantes :
- fournir un ensemble de composants de type actionneur (1), composants de type joint (2) et composants de type structure (3) selon une des revendications 1 à 8 ;
- sélectionner au moins un composant de chaque ensemble et joindre le composant de type actionneur sélectionné (1) sur le composant de type structure sélectionné (3) et raccorder l'interface de raccordement (211,221) du composant de type joint sélectionné (2) avec l'interface de raccordement (33) de la structure de type plaque (32) du composant de type structure sélectionné (3),
- sélectionner un second composant de type structure (3) et raccorder une seconde interface de raccordement (211,221) du composant de type joint sélectionné (2) avec l'interface de raccordement (33) de la structure de type plaque (32) du second composant de type structure sélectionné (3),
- fixer l'élément de transmission de tension (12) entre le composant de type actionneur (1) et le second composant de type structure (3) pour transmettre des forces de tension entre les deux composants.

17. Procédé selon la revendication 15 ou 16,
dans lequel fournir un second composant de type actionneur (1'), joindre le second composant de type actionneur sur ledit composant de type structure sélectionné (3) et fixer un second élément de transmission de tension (12") entre le second composant de type actionneur (1') et le composant de type joint (2) ou le second composant de type structure (3) de sorte que des forces de tension opposée agissent sur les deux composants.
